# EUROPEAN PATENT SPECIFICATION

(11) **EP 4 240 677 B1**
(45) Date of publication and mention of the grant of the patent: **20.11.2024**
(21) Application number: 21835153.4
(22) Date of filing: 04.11.2021
(51) Int. Cl.: B65G 33/18, C05F 17/95, C05F 17/20, C05F 17/60, C05F 17/979

(54) **SUPPORTING STRUCTURE FOR CONTROLLED GRAVITY DISPLACEMENT OF CARRIED MATERIAL AND A DEVICE HAVING THE SAME**
TRAGENDE STRUKTUR ZUR KONTROLLIERTEN SCHWERKRAFTVERSCHIEBUNG VON TRANSPORTIERTEM MATERIAL UND VORRICHTUNG MIT DIESER STRUKTUR
STRUCTURE DE SUPPORT POUR LE DEPLACEMENT PAR GRAVITE CONTROLEE D'UN MATERIEL PORTE ET DISPOSITIF LE COMPORTANT

(30) Priority: 05.11.2020 CZ 20200601
(43) Date of publication of application: 13.09.2023
(73) Proprietor: Vanicek, Petr, 32300 Pizen (CZ); Král, Jaroslav, 70200 Ostrava (CZ); Holusa, Václav, 74766 Dolní Lhota (CZ)
(72) Inventor: Vanicek, Petr, 32300 Pizen (CZ); Král, Jaroslav, 70200 Ostrava (CZ); Holusa, Václav, 74766 Dolní Lhota (CZ)
(74) Representative: Zmeskal, Lukas
(86) International application number: PCT/CZ2021/050124
(87) International publication number: WO 2022/096042

(56) References cited:
- WO-A1-2010/151101
- CN-A- 106 278 436
- CN-A- 107 192 247
- US-A- 3 419 377
- US-A- 4 169 878
- US-A1- 2004 172 996

## Description

### Field of the invention

The present invention relates to a device for feeding in, agitating, aerating, and feeding out of a material, in particular the material comprising biodegradable waste (e.g., undersize fractions of communal waste) with optional drying for improving homogeneity and controlling of the aerobic processes.

### Background of the invention

It is known that the biodegradable waste (bio-waste) is preferably agitated, and/or loosened for their homogenization, possibly for reduction of microbiological contamination within closed aerobic fermentation reactors or on loose heaps or "shaped clamps". The waste may comprise only biodegradable waste (pure biomass, which is a mixture of organic materials), or communal waste, which includes biologically not degradable components in addition to the biodegradable ones. In this case, it may in particular comprise the undersize fraction of the communal waste.

Through natural microbiological processes, the temperature in said biodegradable material increases, wherein the loosening may eliminate the process, or provide equal distribution and optimization of the temperature across the material volume. The process occurs in the aerobic environment with optional feed of external heat to stabilize the aerobic fermentation process.

It is desirable for industrial processing of the material comprising the biodegradable waste to speed up the aerobic fermentation process as much as possible so that the device can process as most material as possible in a given time. Air inflow to the whole volume of the processed material needs to be provided for optimum (and hence fast) processing conditions needed for bacteria that process the bio-waste.

A device for loosening and plumping of the fermenting bio-waste up is known from EP 358,986, for example. The device is used for separation of material layers and comprises a belt circulating around vertical axes. A milling cutter is located on the belt surface. As the belt moves, the milling cutter splits up the front layer of loosely loaded material, and the downstream inclined belt conveyor moves the material to a new secondary storing (fermenting) area. The disadvantages of the device include taking up a large storage area over which the material is repeatedly moved in proportion to the volume of the material being processed. Transferring of the material using the milling cutter is energy demanding but essential for the whole system to operate.

Another device for transferring of the material is disclosed in CZ 1377 U. Just above bottom of the fermentation conduit there is a device comprising horizontally moving milling cutter for separating and bringing the lower layer of the material up. The milling cutter in the form of a shaft with blades in helical arrangement having winding opposite from each other from the centre brings material up to an opening along the longitudinal axis of the fermentation conduit. A horizontal conveyer located under the longitudinal opening transports the material for further processing. The disadvantage of the device is that the milled material is moved by the milling cutter across the conduit to the central opening, and energy loss occurs across the path by friction. Another disadvantage is that longitudinal slots, through which finer particles of the material being processed are falling out in an uncontrolled way, are needed for free travel of the milling cutter in the conduit. In consideration of insufficient closing and isolation of the device, the fermentation process is influenced by ambient temperature and at the same time, the surrounding environment is subject to the burden by the gases that escape the fermentation. Again, the main disadvantage is the unfavourable proportion of the processed material volume per unit of surface area.

Another device is disclosed in CZ 14978 U. Disclosed is a closed fermentation reactor of which movable floor comprises a system of parallel and horizontally arranged milling cutters. Each milling cutter is arranged to an indexing shaft, wherein the rotation angle is in the range from 80° to 120°. Outside the main working space, the milling cutter shafts are driven by a chain with linear reciprocating and transferring motion. Hence, the indexing induces successive reciprocating motion of the juxtaposed milling cutters. Each milling cutter, when indexed to the opposite end position, cuts off the lower part of the material layer. The released material falls through to the space under the milling cutter and may be returned back to the upper layer of the material or used for further processing. The disadvantage of the device is the necessity of frequent mixing by the milling cutters in case of higher layer of the material to subside. Again, the persisting disadvantage is the unfavourable proportion of the processed material volume per unit of surface area.

CN 109,896,174 discloses a silo for agitating of contents thereof, being usable for aerobic fermentation of the material comprising the biodegradable waste. The silo has a cylindrical shape and includes a vertically oriented rotary shaft with an actuator. The shaft is provided with a plurality of agitating and aerating blades. When the shaft rotates, the stored material is agitated, loosened, and aerated. Placement of blades at multiple levels on top of each other allows processing of a higher volume of material stored in a thick layer at the same time. Thereby, more favourable proportion of volume of the material being processed per unit of surface area is achieved. The disadvantage is, however, high forces needed for rotation of the shaft with the blades through the volume of the material. In this case, a robust actuator is required based on hydraulic pistons having high electricity consumption with a massive structure of the work, fitting of the shaft and actuator thereof that can withstand forces generated in operation of the silo.

US 4169878 A discloses a waste disposal unit comprises a non-rotatable vertical cylinder having a waste inlet at the top. From the inlet a ramp extends downwardly to the bottom of the cylinder in a helical pattern. The slope of the ramp is sufficient such that the waste moves down it solely by the action of gravity. A continuous flow of fresh oxygen-containing air is admitted to the cylinder so that the waste material is composted by the time it reaches the bottom of the cylinder. Gaseous products are discharged from the cylinder. Again, the persisting disadvantage is the unfavourable proportion of the processed material volume per unit of surface area. US 4169878 A discloses a supporting structure for controlled gravity displacement of carried material according to the preamble of claim 1.

The objective of the present invention is to provide a device that enables drying of the material or aerobic fermentation of the material comprising biodegradable waste in an energysaving process and under ideal conditions and while occupying a small surface area and with a small enclosure.

### Summary of the invention

Said disadvantages are solved by a supporting structure for controlled gravity displacement of a material, in particular the material comprising biodegradable waste (e.g., undersize fractions of the communal waste), allowing controlled aeration. The supporting structure allows desirable penetration of gases through the carried material. Such a supporting structure is defined in claim 1. The material is processed during the gravity displacement. The processing refers to, in particular, aerobic fermentation or drying. In particular, the gas penetrating through the material is air. In the case of heating of the material, the gas may be exhaust gases of elevated temperature. To specifically influence the processes in the material, specific gases of various properties and temperatures may be used. The specific influence refers to disinfection, dyeing, bacterial inoculation and more, for example.

The supporting structure includes at least two spiral supports having an upper surface and a lower surface. The upper surface and lower surface refer to an area of the material of the spiral supports in case these are the spiral supports comprising the planar supporting elements. For the supporting elements having their shape different from the planar supporting elements, the upper surface and lower surface are for the purpose of the present application defined as an imaginary slid area, shape of which follows (touches) the upper and lower sides of the supporting elements.

The spiral supports form coils. It means that points of the spiral support having mutually different angular positions have mutually different vertical position at the same time. The spiral support is coiled in the space according to interposed definition spiral with a pitch. The spiral support is defined by its pitch or number of spiral revolutions and height of the spiral. All the spiral supports have identical axis. Preferably, origins of the spiral supports (both the upper and lower ones) may be slightly rotated relatively from each other by an angle corresponding to value of 360° divided by the number of the spiral supports. In other words, if two spirals are being used, their origins are relatively rotated by 180°. If three spirals are used, the angle is 120°. It means that the origins are preferably equidistantly spaced around the identical axis of the spiral supports.

Vertical distances between the adjoining threads of the spiral support ranges from 0.5m to 2.0m. The pitch of the spiral support is defined as a multiple of a specific distance within said interval by the number of the spiral supports. It means that the pitch of one spiral support has a value from the range from 1.0m to 4.0m in case that two spiral supports are used. When three spiral supports are used, the pitch of one spiral support is selected from the range from 1.5m to 6.0m.

It is essential that the supporting structure further includes a system of vents. The vents end on the upper surface of the spiral support and/or above the upper surface of the spiral support in maximum distance of 0.7 of the vertical distance between the adjoining threads of the spiral supports. The vents provide gas inflow to the upper surface of each spiral support to enter the gas (aeration) into the material at multiple points of the supporting structure. The supporting structure is adapted to be arranged in a rotary fashion to the envelope as described later.

In a preferred embodiment, the spiral support comprises a system of mutually connected supporting elements. In particular, the advantage of forming of the spiral support from a plurality of supporting elements (compared to an integrated twisted supporting element) is manufacturability thereof. With respect to the material used and the production demands, manufacture of the spiral support from a single piece of material is difficult. The supporting elements may be, in particular, alternating planar supporting elements of at least first and second type. A planar supporting element refers to a structure being substantially thinner than its length and width. The planar supporting elements are arranged so that the first type supporting element is oriented closer to the horizontal plane than the second type supporting element. So, the second type supporting element is oriented closer to the vertical plane than the first type supporting element. In particular, the second type supporting element may be shaped to a general triangle or an isosceles triangle, or a trapezoid or a rectangle. As regards strength of the spiral support, the triangle, in particular the isosceles triangle seems to be optimal. This is achieved by that the triangle shape provides the continuous regular shape of external circumference (edge) of the spiral support, and all forces are transferred to the joints between the planar supporting elements. The spiral support comprising the first and second type supporting elements may (depending on the level of difference of their orientation and the second type supporting element shape) resemble a winding staircase.

The supporting elements other than the planar supporting elements may form, for example, a system of juxtaposed rods twisted into the spiral support (a system of concentric bar spirals forming jointly the spiral support). Gaps may be formed between the bars acting as vents ending on the upper surface of the spiral support as described above. So, the spiral support may be longitudinally or transversely divided, comprised by a plurality of juxtaposed parts with vents, or continuous where the parts are combined into a single body.

The supporting structure may comprise a central tube acting as a central mounting of each spiral support. In this case, the central tube has its longitudinal axis identical to the axis of the spiral support. The spiral support (or the supporting elements forming the same) is attached to the central tube.

The gas inflow vents to the upper surface of each spiral support may be formed as the through-holes on the area of either first type or second type supporting elements. In another embodiment, the gas inflow vents to the upper surface of each spiral support may be formed as the through-holes in the wall of the central tube, ending on and/or above the upper surface of the spiral support. In this case, distribution through a tube may be contemplated (in particular a perforated wall tube) from the hole in the central tube wall towards the edge of the spiral support. This provides gas inflow also to the material located closer to the edge of the spiral support.

In its upper end, the supporting structure may include a supporting ring for rotary mounting inside the envelope and for definition of the horizontal and/or vertical position of the supporting structure in relation to the envelope. Correct position of the supporting structure in relation to the envelope is important as both the components are rotatable relatively to each other with a relatively small clearance. The envelope may be standalone or may be included in a superordinate supporting frame of the envelope. In this case, the envelope and/or the envelope supporting frame must be provided with a supporting ring counterpart. With the help of the supporting ring, the supporting structure may be fit (hung) inside the envelope and/or the envelope supporting frame by bearings, for example. The described fitting of the supporting structure provides its required, substantially vertical orientation.

The supporting structure may be a part of a device for processing of the material, in particular the one comprising biodegradable waste. In addition to the supporting structure described above, the device includes at least an envelope in which the supporting structure is fitted in a rotary fashion, preferably as described in the previous clause. Further, an embodiment may be contemplated in which the supporting structure has its lower portion (usually the central tube) rotary fitted to a base with a bearing to provide the vertical position of the supporting structure. Another alternative is a supporting structure put (usually with the central tube) to the fixed vertical spine (pin), wherein the supporting structure is rotary in relation to the spine. The two alternative embodiments provide that the supporting structure is fixed in the vertical position without fixing needed in the upper portion to the envelope and/or the envelope supporting frame. The supporting structure is oriented in the device so that common axis of the spiral supports is vertical with not more than 8° deviation. It is desirable that the axis is precisely vertical but maximum deviation equal to or less than 8° does not bring about a significant unevenness to the balance of the spiral support. Preferably, the envelope is closed to avoid gas and heat leaks to the surrounding atmosphere. The envelope is provided in the upper portion with a breather hole, possibly provided with a filter to remove smell from the leaking gases. The inner surface of the envelope may comprise a plurality of vents in order to provide air inflow (aeration) into the material on multiple points of the supporting structure. The vents may be used in combination with the vents of the spiral support.

In addition, the device includes a technical means for rotating of the supporting structure inside the envelope. In particular, it may comprise an electric servo-drive, hydraulic drive, and more. Manual drive, e.g., a handle with gears, may be contemplated for a low volume (low size) device. Further, the device includes a forced-draught blower for gas blasting inside the envelope space. The blasted gas is important for proper activity of the micro-organisms that process the biomass or for moisture removal from the material being dried.

Depending on size and specific embodiment, the device may include at least one conveyor for the material and/or at least one upper spreader. They are used for transport and/or loading of the material to the upper portion of the supporting structure. The device may in addition comprise at least one lower conveyor of the material and/or at least one lower spreader for feeding in and/or feeding out the material in the lower portion of the device.

Further, the device may include an independently moved partition. The independently moved partition means that the partition is rotary, slidable, etc. independently from other movable elements of the device. The partition is located between the supporting structure and the lower spreader. The partition is provided with at least one hole for dropping of the material to the lower spreader. Outside of said hole the partition should be as smoothest as possible and devoid of any holes not designed for dropping of the material. Owing to this, the resistance caused by the material loaded on the partition is lower while rotating. When no partition is used, in particular when loading the material to the device, accumulation of the material in the lower portion of the device under the supporting structure may occur. The lower spreader and/or lower conveyor may be congested thereby. When loading the material, the partition may be rotated so that the hole is covered by the lower end of the supporting structure. The loaded material rests on the supporting structure and on the partition, and the lower spreader and/or the lower conveyor are not congested. When unloading of the material from the lower portion of the device is desired, slow and successive movement (in particular rotation) of the partition arranges for successive controlled dropping of the material through the partition hole so it may be reliably taken by the lower spreader and/or lower conveyor. As soon as all the material from the partition drops through the hole, the supporting structure may be slightly rotated to slide further material onto the partition and/or partition hole.

It is preferable for precise control of the material treatment process (supporting structure rotation speed inside the envelope and gas volume blasted by the blower to the envelope) when the device further includes a system of sensors for measurement of temperature and/or oxygen concentration and/or moisture level inside the envelope. Owing to this, the device is preferably adapted to autonomous operation with a remote control.

It may be preferable for achieving of an optimum temperature for the material processing inside the envelope if the latter is provided with a thermal insulation. Excessive loss of heat generated by the microorganisms during the fermentation is thus prevented. It could result in undesired deceleration of their activity and productivity. The use of thermal insulation, if any, depends in particular on the environment for which the device is designed (cold climate or tropic climate).

Depending on a specific embodiment the envelope may be self-supporting or may be provided with a supporting frame as described above.

It is preferred for optimum course of the controlled gravity displacement of the material that the inner surface of the envelope is provided with at least one inwardly extending element to restrict rotary movement of the material when the supporting structure rotates. The inwardly extending element may be, e.g., an elongated, vertically oriented rib located substantially across whole envelope height. It is in particular suitable for proper effect when more than one extending element is used.

Depending on the specific embodiment the conveyor for material transport to the upper portion of the supporting structure may be at least partially included in the central tube and adapted for transport of the material via the central tube. In this case, the conveyor for material transport to the upper portion of the supporting structure partially included in the central tube may be in the form of a screw conveyor having its longitudinal axis identical to the spiral supports axis. A non-rotary base is located under the central tube into which the lower portion of said screw conveyor is fitted. The lower conveyor of the material, which feeds fresh material to the screw conveyor (the conveyor for material transport to the upper portion of the supporting structure) ends in the non-rotary base. Preferably, the lower conveyor of the material may be used also for unloading of the processed material from the lower portion of the device. The non-rotary base may have form of a foot with a bearing for fitting of the central tube.

The conveyor inside the central tube takes up the material in the lower portion of the device and transports the same to the upper portion of the supporting structure. Here, the material is dumped on the upper portion of the supporting structure to the point of the upper origins of the spiral supports. Here, the upper spreader may evenly distribute the material across the area of the supporting structure, to all spiral supports from where it may be displaced by gravity in a controlled way to the lower portion of the device.

In this embodiment with the conveyor for material transport to the upper portion of the supporting structure inside the central tube, the forced-draught blower output for gas blasting inside the envelope may end in the lower portion of the envelope. The gas then propagates over the processed material, under the lower surface of the spiral support located at a higher level. The gas partially penetrates through the vents in the spiral support from the bottom to top.

In another embodiment, the forced-draught blower output for blasting of the gas inside the envelope may end in the central tube, and the transport of the material to the upper portion of the supporting structure is provided in a different way. In this case the central tube may be provided on its wall with a system of vents in the form of through-holes ending on and/or above the upper surface of the spiral support as described above. An external conveyor located outside the envelope may be used for material transport to the upper portion of the supporting structure. In this case, a closable hopper in the upper wall (ceiling) of the envelope may be used.

In both embodiments described above the gas propagates from the bottom to the top through the material loaded on the spiral support after it exits the vents. Owing to this, the gas penetrates through the whole volume of the material which is the key for proper material processing.

From the top, the material is distributed evenly across the area of the supporting structure to all spiral supports. Through the material friction caused by the spiral supports, envelope inner wall, and the inwardly extending elements in the envelope, if any, there is not spontaneous gravity material displacement on the spiral support surface. When unloading of the material from the lower portion of the device is desired, the supporting structure is slightly rotated in a controlled way within the envelope using a rotation actuator. The material friction caused by the envelope inner wall and by the inwardly extending elements in the envelope, if any, is higher than the material friction caused by the spiral support. Relative oblique displacement of the spiral support in relation to the material thereby occurs. The horizontal (angular) position of the material does not change in the device owing to friction-caused fixation to the envelope inner wall, and the inwardly extending elements in the envelope, if any. Only the controlled vertical material displacement occurs, i.e., the controlled gravity displacement of the material to the lower portion of the device. The supporting structure rotation speed (depending on height of the supporting structure and the spiral support pitch) may control time needed to displace the material in a controlled way from the upper origin up to the lower origin of the spiral support in the lower portion of the device. The rate (speed) of treatment of the processed material may be effectively controlled thereby in combination with the temperature control and the gas blasting volume. Through the successive rotation of the supporting structure, the processed material is slid in the lower portion of the device from the lower origin of the spiral support. The slid material is unloaded from the lower portion of the device, preferably using the conveyor, in particular the lower conveyor as described above. The material may be then used for further processing. It may be, however, returned back to the upper portion of the supporting structure for reprocessing to achieve high level of processing.

To fill the inner space of the supporting structure (or of the whole device) and to displace the material by gravity correctly, correct proportion between the supporting structure diameter, number of the spiral supports, and vertical distance between the adjoining threads of the spiral supports is needed. These quantities have impact on the spiral support pitch that is the key one for correct material displacement by gravity. A suitable spiral support pitch results in a favourable mean proportion of the gravity and friction of the carried material caused by the spiral support surface so that the friction slightly prevails. It is hereby provided that the use of low force applied for slight rotation of the supporting structure results in the vertical displacement of the carried material.

If the spiral support pitch is too low, it may be difficult to rotate the supporting structure. On the contrary, excessive spiral support pitch causes spontaneous sliding of the material inside the supporting structure by gravity only. This in fact does not result in the device failure but prevents the accurate process control and the controlled gravity displacement of the material. Consequently, the material is insufficiently processed, some portions of which go through the device too fast to be exposed to the desired processes inside the device for sufficiently long time.

A higher number of the spiral supports has positive impact on easiness of unloading of the material being processed from the lower portion of the device. The spiral supports divide the total material volume inside the device to a plurality of separated floors. A thin layer of the processed material may be easily removed in the lower portion of the device where the conveyor does not get congested contrary to high and compact layer of the material. The use of higher number of the spiral supports achieves thin layer of the material, which prevents the undesired subside thereof. Said effect is not effectively achieved when single spiral support is used. Considering the applicable range of the pitch, there would be too high head space above the material in the device with sufficiently thin layer of the material. Hence, the volume of material that may be processed at a specific moment in the device would be negatively impacted. On the contrary, where the full inner space is filled, undesired subside of thick layer of the material would take place.

Preferably, the device is applicable to processing of the material comprising biodegradable waste (e.g., the undersize fraction of the communal waste). The material of this type uses to be harmful and smells bad. Within some tens of hours of processing in said device, the material turns into safe one, does not smell bad after processing, and may be further used while applying less strict safety and environmental protection standards. Further, the device may be deployed for processing of clean biodegradable waste (biomass) for compost production and for drying of organic as well as inorganic material. The device may be a device for feeding in, agitation, aeration, or drying and feeding out of the biodegradable waste and of undersize fraction of communal waste for improving of its homogeneity and aerobic processes control.

### Description of drawings

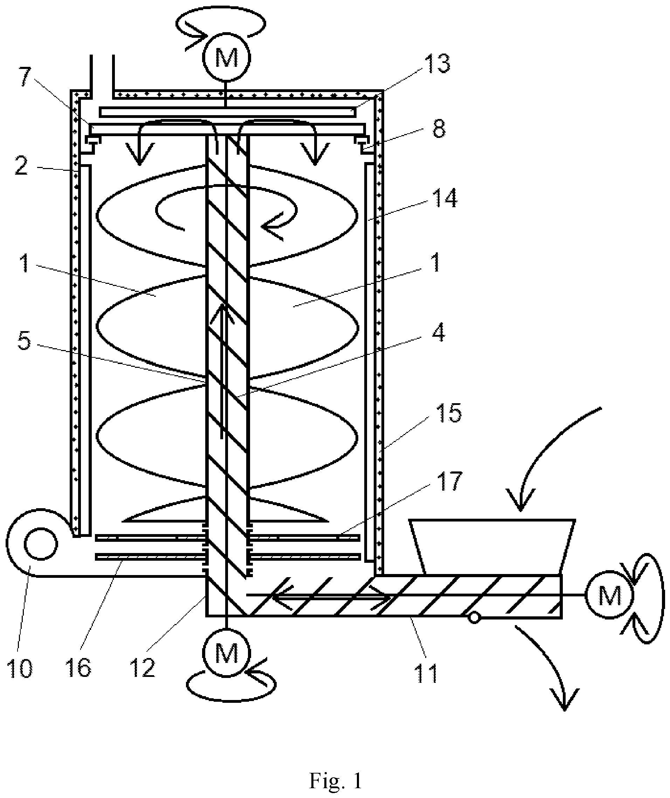

The exemplary embodiment of the proposed technique is described with reference to the drawings, where Fig. 1 illustrates a schematic vertical cross-section of the device in an embodiment with two spiral supports and a screw conveyor inside a central tube;
Fig. 2 illustrates a vertical cross-section of the device in the embodiment with two spiral supports, a supporting frame, and a blower ending in a central tube;
Fig. 3 illustrates a theoretical model of a supporting structure with two spiral supports and a central tube;

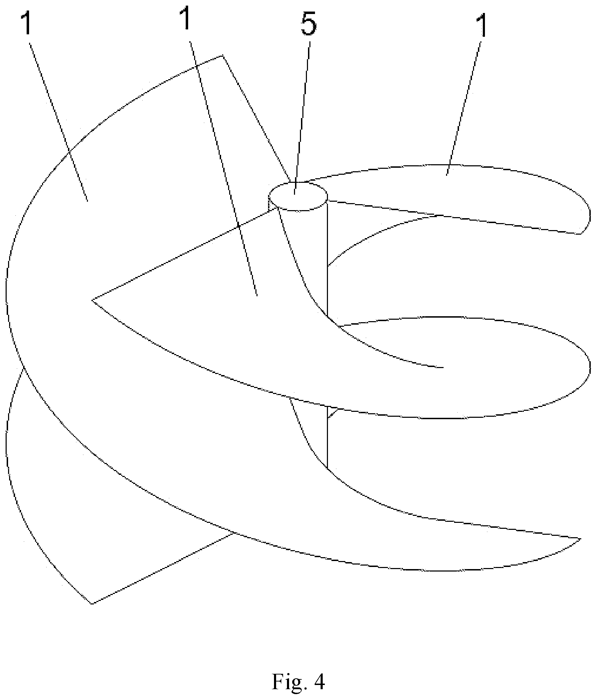

Fig. 4 illustrates a theoretical model of a supporting structure with three spiral supports and a central tube;
Fig. 5 illustrates axonometric view to a portion of a supporting structure usable in the device in Fig. 1;
Fig. 6 illustrates side view to a longer section of a supporting structure from Fig. 5;
Fig. 7 illustrates another axonometric view to a supporting structure from Fig. 5;
Fig. 8 illustrates developed partial cylindrical cross-section of filled supporting structure from

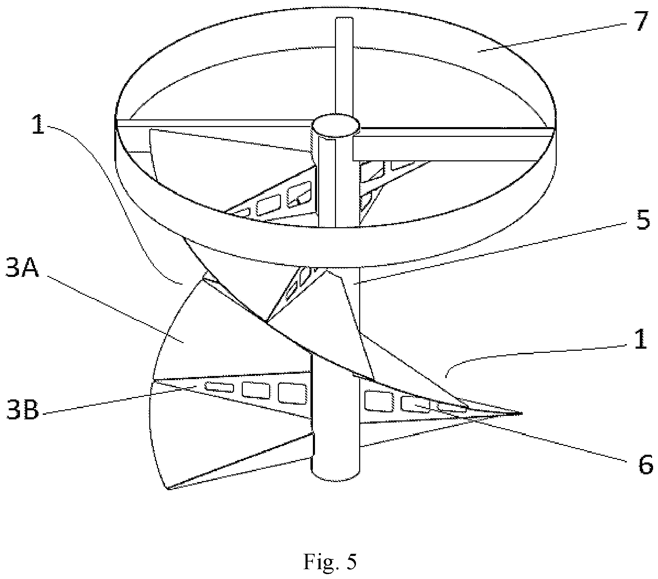

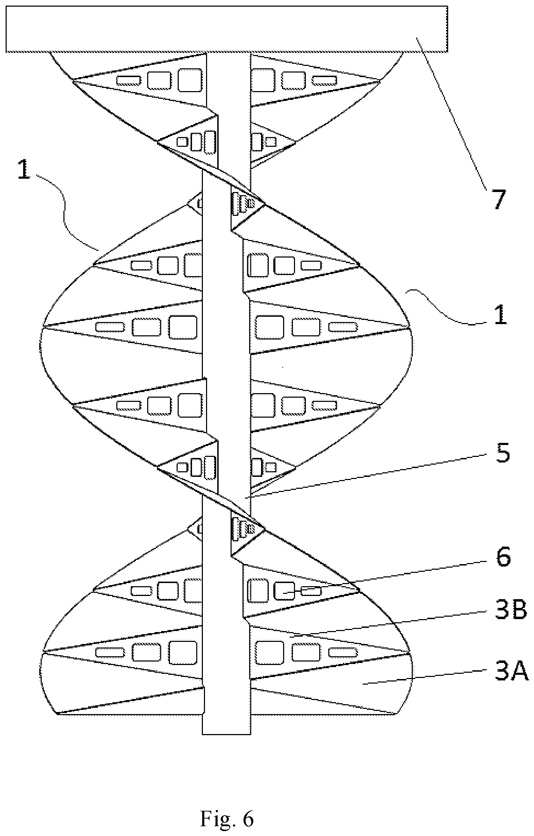

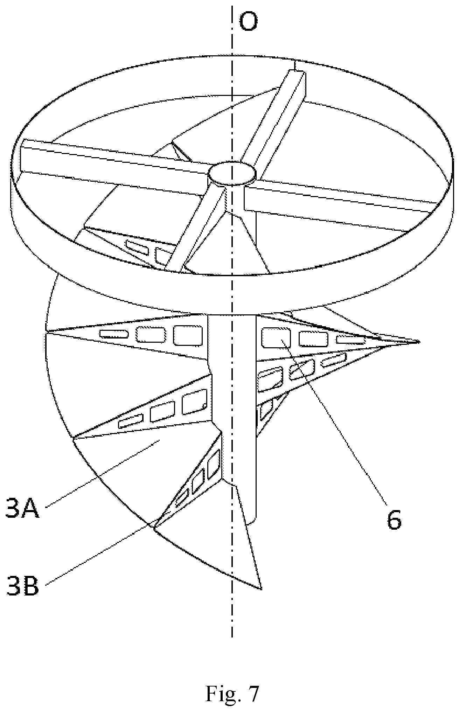

Fig. 5 to Fig. 7, wherein the cylinder has axis identical to axis of a supporting structure;

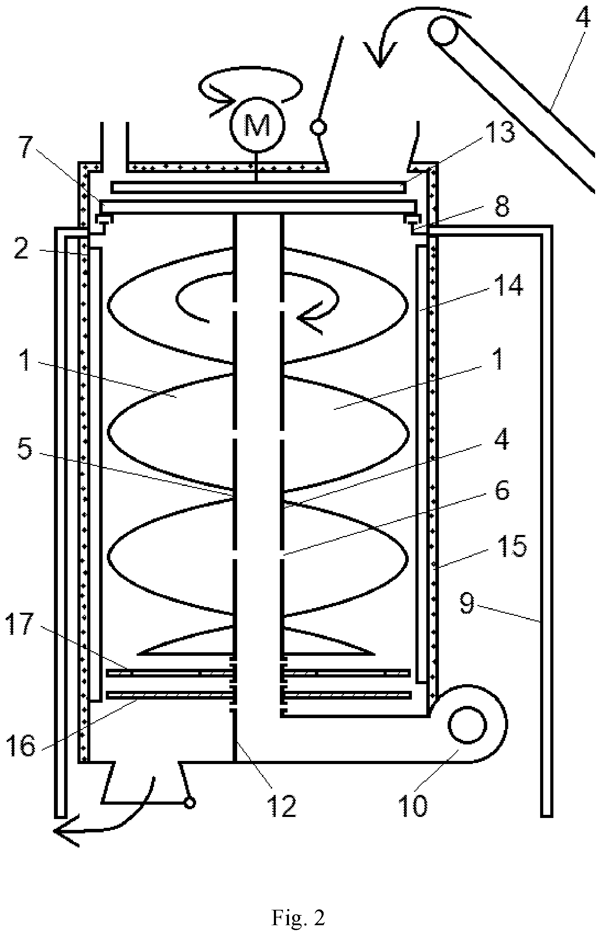

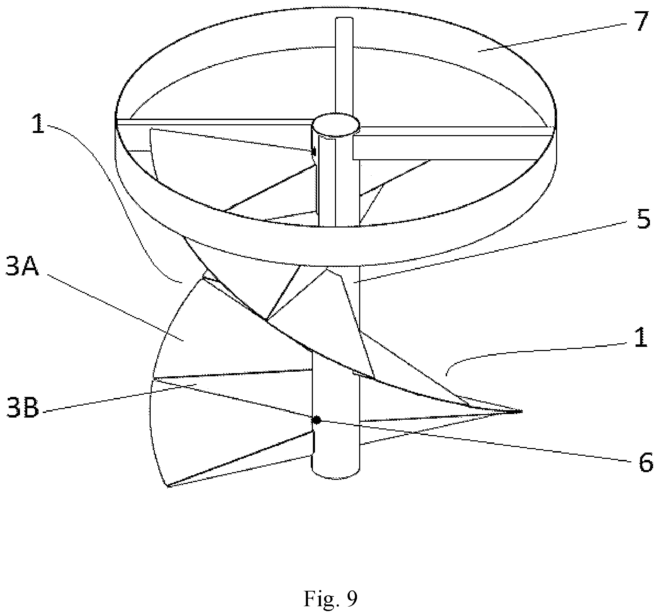

Fig. 9 illustrates axonometric view to a portion of a supporting structure usable in the device in Fig. 2.

### Exemplary embodiments of the invention

### Example 1

A supporting structure for controlled gravity displacement of carried material includes two spiral supports 1. The spiral supports 1 form coils and have a common axis O. The origins of the spiral supports 1 are rotated relatively from each other by 180°, which corresponds to 360° divided by the number of the spiral supports 1. Vertical distance between adjoining (arranged on top of each other) threads of the spiral supports 1 is 1.2m in the present case. The supporting structure includes a central tube 5 forming a central mounting of the spiral supports 1. The central tube 5 has its longitudinal axis identical to the spiral support 1 axis O.

Each of the spiral supports 1 comprises a system of mutually connected supporting elements 3. They are planar first type supporting elements 3A and second type supporting elements 3B.

The planar supporting elements are arranged so that the first type supporting element 3A is oriented closer to the horizontal plane than the second type supporting element 3B.

The supporting structure comprises a system of vents 6 for gas inflow to the upper surface of each spiral support 1. The vents 6 have a form of through-holes on the area of the first type supporting elements 3B.

The supporting structure is designed to be arranged in a rotary fashion inside an envelope 2. To this end, the supporting structure is provided on its upper end with a supporting ring 7 for rotary mounting inside the envelope 2 and for definition of the horizontal and vertical position of the supporting structure in relation to the envelope 2. The envelope 2 is provided with a supporting ring 7 counterpart 8 and a thermal insulation 15. The inner surface of the envelope 2 is provided with inwardly extending elements 14.

The device for processing of the material comprising biodegradable waste includes said supporting structure, envelope 2 in which the supporting structure is arranged in a rotary fashion, a not illustrated actuator for rotation of the supporting structure inside the envelope 2, and a forced-draught blower 10 for gas blasting in the envelope 2 inner space. Further, the device includes a system of sensors for measuring of temperature, oxygen concentration, and moisture in the envelope 2 inner space.

Further, the device includes a conveyor 4 for material transport to the upper portion of the supporting structure, an upper spreader 13 for placing of the material in the upper portion of the supporting structure upon unloading from the conveyor 4, and a lower conveyor 11 for transport and filling of the material externally to the device.

The conveyor 4 for material transport to the upper portion of the supporting structure is partially included in the central tube 5 and adapted to material transport via the central tube 5. The conveyor 4 has a form of a screw conveyor having its longitudinal axis identical to the spiral supports 1 axis O. The common spiral supports 1 axis O is oriented vertically in the device. A non-rotary base 12 is located under the central tube 5 in which the lower portion of the screw conveyor is fitted. The lower conveyor 11 of the material ends in the non-rotary base 12. In the lower portion of the device there is a rotary lower spreader 16 between the lower conveyor 11 of the material and the supporting structure. The lower spreader 16 spreads the material slid from the supporting structure so that it may be removed from the lower portion of the device. Preferably, the material may be pushed to the lower conveyor 11 using the lower spreader 16. The lower conveyor 11 may transport the material to the non-rotary base 12 for reprocessing in the device. After the sufficient level of the material processing is achieved, the processed material may be unloaded from the device by reverse operation of the lower conveyor 11, for example via the closable hole in the lower portion of the lower conveyor 11. A rotary partition 17 is arranged between the supporting structure and the lower spreader 16. The partition 17 is round in the top view and provided with two holes for the material to drop onto the lower spreader 16. The partition 11 is independently rotatable on the supporting structure as well as on the lower spreader 16.

Among others, achieving of sanitary temperatures across the volume of the material being processed comprising the biodegradable waste is possible through the controlled aerobic fermentation in the device. Preferably, it uses vertical orientation of the supporting structure carrying the material in separated layers 1.2m thick and controlled material aeration by distribution of temperatures, or oxygen contents within each layer. The aeration takes place through the blower 10 as well as natural convection in the material being heated.

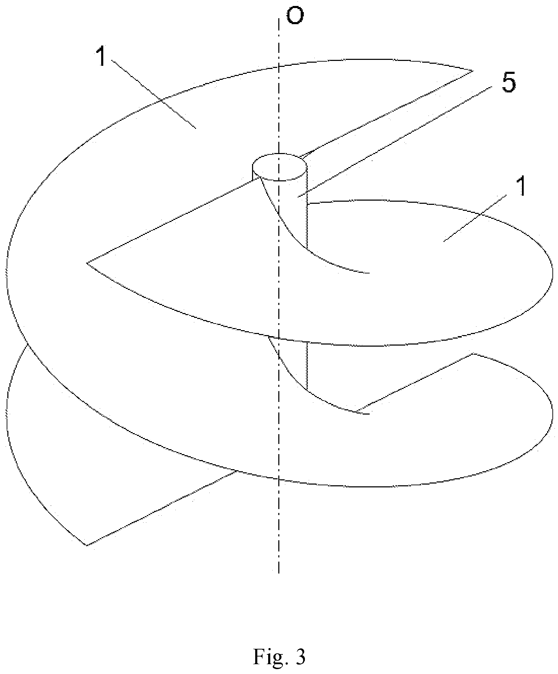

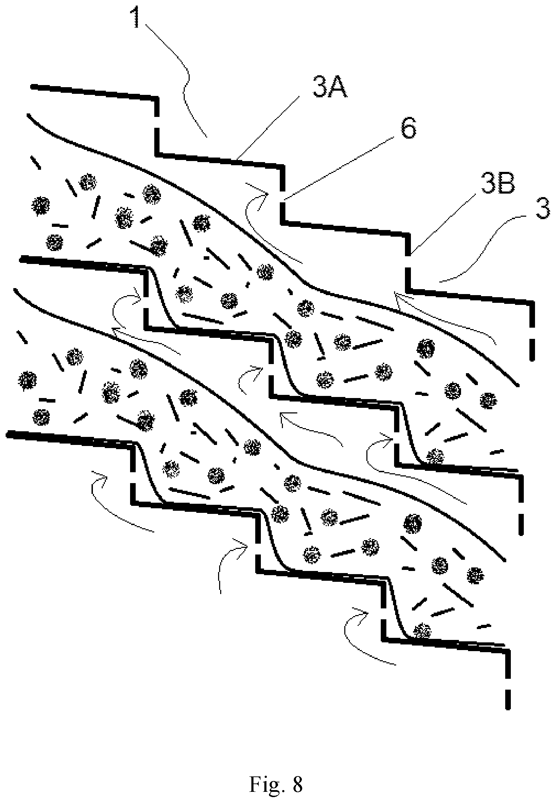

The exemplary embodiment is shown in Fig. 1, Fig. 3, and Fig. 5 to Fig. 8.

### Example 2

A supporting structure for controlled gravity displacement of carried material includes two spiral supports 1. The spiral supports 1 form coils and have a common axis O. The origins of the spiral supports 1 are rotated relatively from each other by 180°, which corresponds to 360° divided by the number of the spiral supports 1. Vertical distance between adjoining (arranged on top of each other) threads of the spiral supports 1 is 1.2m in the present case. The supporting structure includes a central tube 5 forming a central mounting of the spiral supports 1. The central tube 5 has its longitudinal axis identical to the spiral support 1 axis O.

Each of the spiral supports 1 comprises a system of mutually connected supporting elements 1. They are planar first type supporting elements 3A and second type supporting elements 3B. The planar supporting elements are arranged so that the first type supporting element 3A is oriented closer to the horizontal plane than the second type supporting element 3B.

The supporting structure comprises a system of vents 6 for gas inflow to the upper surface of each spiral support 1. The vents 6 have a form of through-holes in the wall of the central tube 5. The vents 6 end 12cm above the upper surface of the spiral support 1 (which is 0.1 of the distance between adjoining threads of the spiral supports 1). The gas enters via them to the lower portion of the material resting on the spiral supports 1.

The supporting structure is designed to be arranged in a rotary fashion inside an envelope 2. To this end, the supporting structure is provided on its upper end with a supporting ring 7 for rotary mounting inside the envelope 2 and for definition of the horizontal and vertical position of the supporting structure in relation to the envelope 2. The envelope 2 is provided with a supporting ring 7 counterpart 8 and a thermal insulation 15. The inner surface of the envelope 2 is provided with an inwardly extending elements 14.

The device for processing of the material comprising biodegradable waste includes said supporting structure, the envelope 2 in which the supporting structure is arranged in a rotary fashion, an actuator for rotation of the supporting structure inside the envelope 2, and a forced-draught blower 10 for gas blasting in the envelope 2 inner space. The common spiral support 1 axis O is oriented vertically in the device. The forced-draught blower 10 output ends in the central tube 5 through the non-rotary base 12 located under the central tube 5. Further, the device includes a system of sensors for measuring of temperature, oxygen concentration, and moisture in the envelope 2 inner space. In this case the envelope 2 is not self-supporting and it is therefore provided with a superior envelope 2 supporting frame 9.

Further, the device includes a conveyor 4 for material transport to the upper portion of the supporting structure, an upper spreader 13 for placing of the material in the upper portion of the supporting structure upon unloading from the conveyor 4. The conveyor 4 for material transport to the upper portion of the supporting structure is located outside the inner space of the envelope 2 and the conveyor is a belt one. A closable hopper in the upper wall (ceiling) of the envelope 2 is used for material entry from the conveyor 4 to the closed envelope 2.

A rotary partition 17 is arranged under the supporting structure in the lower portion of the device. A lower spreader 16 is located under the rotary partition 17. The partition 17 is round in the top view and provided with two holes for the material to drop onto the lower spreader 16. The partition 17 is independently rotatable on the supporting structure as well as on the lower spreader 16. The lower spreader 16 is a rotary one and spreads the material slid from the supporting structure so that it may be removed from the lower portion of the device, e.g., via the closable cover in the lower portion of the device.

The exemplary embodiment is shown in Fig. 2, Fig. 3, and Fig. 9.

### List of reference symbols

1 - spiral support
2 - envelope
3 - supporting element
3A - first type supporting element
3B - second type supporting element
4 - conveyor for material transport to the upper portion of supporting structure
5 - central tube
6 - vent
7 - supporting ring
8 - supporting ring counterpart
9 - supporting frame
10 - forced-draught blower
11 - lower conveyor
12 - non-rotary base
13 - upper spreader
14 - extending element
15 - thermal insulation
16 - lower spreader
17 - partition
O - spiral support axis

## Claims

1. A supporting structure for controlled gravity displacement of carried material **characterized in that** it comprises at least two spiral supports (1) having an upper surface and a lower surface,
said spiral supports (1) form coils and have a common axis (O),
wherein the vertical distance between the adjoining threads of the spiral supports (1) is in range from 0.5m to 2.0m, the supporting structure further includes a system of vents (6) for gas inflow to the upper surface of each spiral support (1) that end on the upper surface of the spiral support (1) and/or above the upper surface of the spiral support (1) in the distance of not more than 0.7 of the vertical distance between the adjoining threads of the spiral supports (1),
wherein the supporting structure is adapted to the rotary mounting inside an envelope (2) with the spiral support (1) axis (O) oriented vertically with deviation not more than 8°.

2. The supporting structure according to claim 1 **characterized in that** the spiral support (1) comprises a system of mutually connected supporting elements (3).

3. The supporting structure according to claim 2 **characterized in that** the supporting elements (3) are alternating planar supporting elements (3) of at least first type (3A) and of second type (3B) arranged so that the first type supporting element (3A) is oriented closer to the horizontal plane than the second type supporting element (3B).

4. The supporting structure according to any one of preceding claims 1 to 3 **characterized in that** it includes a central tube (5) forming a central mounting of the spiral supports (1), having longitudinal axis identical to the spiral supports (1) axis (O).

5. The supporting structure according to one any of preceding claims 1 to 4 **characterized in that** the vents (6) for gas inflow to the upper surface of each spiral support (1) have a form of through-holes on the area of the second type supporting elements (3B).

6. The supporting structure according to claim 4 **characterized in that** the vents (6) for gas inflow to the upper surface of each spiral support (1) have a form of through-holes in the wall of the central tube (5) ending on and/or above the upper surface of the spiral support (1).

7. The supporting structure according to any one of preceding claims 1 to 6 **characterized in that** it includes a supporting ring (7) on its upper end for rotary mounting inside the envelope (2) and for definition of horizontal and/or vertical position of the supporting structure in relation to the envelope (2), wherein the envelope (2) and/or the envelope (2) supporting frame (9) is provided with a supporting ring (7) counterpart (8).

8. A device for controlled gravity displacement of carried material **characterized in that** it includes
- a supporting structure for the controlled gravity displacement of carried material according any of the previous claims arranged so that the spiral support (1) axis (O) is oriented vertically with deviation not more than 8°;
- an envelope (2) in which the supporting structure is arranged in a rotary fashion;
- a technical means for rotating of the supporting structure inside the envelope (2);
- a forced-draught blower (10) for gas blasting inside the envelope (2) space.

9. The device according to claim 8 **characterized in that** it further includes at least one material conveyor (4) and/or upper spreader (13) for transport and/or loading of the material to the upper portion of the supporting structure
and/or includes at least one material lower conveyor (11) and/or lower spreader (16) for filling of the material and/or removing of the material in the lower portion of the device.

10. The device according to claim 8 or 9 **characterized in that** it further includes an independently movable partition (17) located between the supporting structure and the lower spreader (16),
wherein the partition (17) is provided with at least one hole for dropping of the material to the lower spreader (16).

11. The device according to any one of claims 8 to 10 **characterized in that** the envelope (2) is provided with a thermal insulation (15).

12. The device according to any one of claims 8 to 11 **characterized in that** the inner surface of the envelope (2) is provided with at least one inwardly extending element (14).

13. The device according to any one of claims 9 to 12 **characterized in that** the conveyor (4) for material transport to the upper portion of the supporting structure is at least partially included in the central tube (5) and adapted for material transport via the central tube (5).

14. The device according to claim 13 **characterized in that** the conveyor (4) for material transport to the upper portion of the supporting structure partially included in the central tube (5) has a form of screw conveyor having its longitudinal axis identical to the spiral support (1) axis (O),
a non-rotary base (12) is located under the central tube (5) in which the lower portion of the screw conveyor is fitted,
and the material lower conveyor (11) for filling of the material and removal of the material in the lower portion of the device ends in the non-rotary base (12).

15. The device according to any one of claims 8 to 12 **characterized in that** the forced-draught blower (10) output for gas blasting to the inner space of the envelope (2) ends in the central tube (5).

## Patentansprüche

1. Tragende Konstruktion für die kontrollierte Schwerkraftverschiebung eines belasteten Materials, **dadurch gekennzeichnet, dass** sie mindestens zwei spiralförmige Stützen (1) mit einer Oberseite und einer Unterseite hat,
wobei die spiralförmigen Stützen (1) Windungen bilden und die gleiche Achse (O) haben,
der vertikale Abstand zwischen den benachbarten Windungen der spiralförmigen Stützen (1) zwischen 0,5 und 2,0 m beträgt, wobei die Trägerstruktur ferner einen Satz von Entlüftungsöffnungen (6) für den Gaszugang zur oberen Fläche jeder spiralförmigen Stütze (1) umfasst, die an der oberen Fläche der Spiralförmigen Stütze (1) und/oder oberhalb der oberen Fläche der spiralförmigen Stütze (1) in einem maximalen Abstand von 0,7 des vertikalen Abstands zwischen benachbarten Windungen der spiralförmigen Stützen (1) austreten,
wobei die Trägerstruktur zum drehbaren Einbau in das Gehäuse (2) geeignet ist, indem die Achse (O) der spiralförmigen Stützen (1) vertikal mit einer maximalen Abweichung von 8° ausgerichtet ist.

2. Die tragende Konstruktion nach Anspruch 1, zeichnet sich dadurch aus, dass die spiralförmige Stütze (1) einen Satz von miteinander verbundenen tragenden Elementen (3) umfasst.

3. Die tragende Konstruktion Anspruch 2, zeichnet sich dadurch aus, dass die tragenden Elemente (3) abwechselnd ebene tragende Elemente (3) mindestens des ersten Typs (3A) und des zweiten Typs (3B) sind, die so angeordnet sind, dass das tragende Element des ersten Typs (3A) näher an der horizontalen Ebene ausgerichtet ist als das tragende Element des zweiten Typs (3B).

4. Die tragende Konstruktion nach einem der vorhergehenden Ansprüche 1 bis 3 zeichnet sich dadurch aus, dass sie ein zentrales Rohr (5) hat, das eine zentrale Stütze der spiralförmigen Stützen (1) bildet und eine mit der Achse (O) der spiralförmigen Stützen (1) identische Längsachse aufweist.

5. Die tragende Konstruktion nach einem der vorhergehenden Ansprüche 1 bis 4 zeichnet sich dadurch aus, dass die Entlüftungsöffnungen (6) für den Gaszugang zur Oberseite jeder spiralförmigen Stütze (1) in Form von Durchgangslöchern in der Oberfläche der tragenden Elemente des zweiten Typs (3B) ausgebildet sind.

6. Die tragende Konstruktion nach Anspruch 4 zeichnet sich dadurch aus, dass die Entlüftungsöffnungen (6) für den Gaszutritt auf der Oberseite jeder spiralförmigen Stütze (1) als Durchgangslöcher in der Wand des Zentralrohrs (5) ausgebildet sind, die auf und/oder oberhalb der Oberseite der spiralförmigen Stütze (1) münden.

7. Die tragende Konstruktion nach einem der vorhergehenden Ansprüche 1 bis 6 zeichnet sich dadurch aus, dass sie an ihrem oberen Ende einen tragenden Ring (7) zur schwenkbaren Montage im Gehäuse (2) und zur Festlegung der horizontalen und/oder vertikalen Position der tragenden Konstruktion relativ zum Gehäuse (2) aufweist, wobei das Gehäuse (2) und/oder der Stützrahmen (9) des Gehäuses (2) mit einem Gegenstück (8) des tragenden Rings (7) versehen ist.

8. Vorrichtung zur kontrollierten Schwerkraftverschiebung des getragenen Materials, die sich dadurch auszeichnet, dass sie
- eine tragende Konstruktion zur kontrollierten Schwerkraftverschiebung des geladenen Materials nach einem der vorhergehenden Ansprüche umfasst, die so angeordnet ist, dass die Achse (O) der spiralförmigen Stützen (1) vertikal mit einer maximalen Abweichung von 8° ausgerichtet ist;
- das Gehäuse (2), in der die tragende Konstruktion schwenkbar gelagert ist;
- technische Mittel zum Drehen der tragenden Konstruktion innerhalb des Gehäuses (2);
- ein Druckgebläse (10) zum Einblasen von Gas in den Innenraum des Gehäuses (2).

9. Vorrichtung nach Anspruch 8, ferner **dadurch gekennzeichnet, dass** sie ferner mindestens einen Materialförderer (4) und/oder einen oberen Spreizer (13) zum Fördern und/oder Ablegen von Material im oberen Teil der tragenden Konstruktion umfasst
und/oder mindestens einen unteren Materialförderer (11) und/oder einen unteren Verteiler (16) zum Einfüllen von Material und/oder zum Entfernen von Material am Boden der Vorrichtung umfasst.

10. Vorrichtung nach Anspruch 8 oder 9, **dadurch gekennzeichnet, dass** sie außerdem ein unabhängig bewegliches Sieb (17) umfasst, das zwischen der tragenden Konstruktion und dem unteren Spreizer (16) angeordnet ist,
wobei das Sieb (17) mit mindestens einer Öffnung versehen ist, durch die das Material zum unteren Verteiler (16) fallen kann.

11. Vorrichtung nach einem der Ansprüche 8 bis 10, **dadurch gekennzeichnet, dass** das Gehäuse (2) mit einer Wärmedämmung (15) versehen ist.

12. Vorrichtung nach einem der Ansprüche 8 bis 11, **dadurch gekennzeichnet, dass** die innere Oberfläche des Gehäuses (2) mit mindestens einem nach innen gerichteten Element (14) versehen ist.

13. Vorrichtung nach einem der Ansprüche 9 bis 12, **dadurch gekennzeichnet, dass** der Förderer (4) zum Fördern des Materials in den oberen Bereich der tragenden Konstruktion zumindest teilweise im zentralen Rohr (5) enthalten ist und zum Fördern des Materials durch das zentrale Rohr (5) angepasst ist.

14. Vorrichtung nach Anspruch 13, **dadurch gekennzeichnet, dass** der Förderer (4) zum Fördern von Material in den oberen Bereich der teilweise im Zentralrohr (5) enthaltenen tragenden Konstruktion die Form einer Förderschnecke mit einer Längsachse hat, die mit der Achse (O) der spiralförmigen Stützen (1) identisch ist,
unter dem Zentralrohr (5) befindet sich ein nicht drehbarer Sockel (12), in dem der untere Teil der Förderschnecke untergebracht ist
und ein unterer Materialförderer (11) befindet sich im nicht drehbaren Sockel (12) für die Materialbefüllung und den Materialabtransport im unteren Teil der Vorrichtung.

15. Vorrichtung nach einem der Ansprüche 8 bis 12, **dadurch gekennzeichnet, dass** der Ausgang des Druckgebläses (10) zum Ansaugen von Gas in den Innenraum des Gehäuses (2) in das Zentralrohr (5) mündet.

## Revendications

1. Structure portante pour le déplacement gravitationnel contrôlé d'un matériau chargé, **se caractérisant par le fait qu'**elle comprend au moins deux supports en spirale (1) ayant une surface supérieure et une surface inférieure,
dont les supports en spirale (1) forment des filets et ont le même axe (O),
où la distance verticale entre les filets adjacents des supports en spirale (1) est comprise entre 0,5 et 2,0 m, la structure portante comprenant en outre un ensemble d'évents (6) pour l'accès du gaz à la surface supérieure de chaque support en spirale (1), qui sortent sur la surface supérieure du support en spirale (1) et/ou au-dessus de la surface supérieure du support en spirale (1) à une distance maximale de 0,7 de la distance verticale entre les filets adjacents des supports en spirale (1),
la structure portante étant adaptée à une installation rotative dans l'enveloppe (2) par l'axe (O) des supports en spirale (1) orienté verticalement avec une déviation maximale de 8°.

2. Structure portante selon la revendication 1, **se caractérisant par le fait que** le support en spirale (1) comprend un ensemble d'éléments portants interconnectés (3).

3. Structure portante selon la revendication 2, **se caractérisant par le fait que** les éléments portants (3) sont des éléments portants plans alternés (3) d'au moins un premier type (3A) et un second type (3B) disposés de telle sorte que l'élément portant de premier type (3A) est orienté plus près du plan horizontal que l'élément portant de second type (3B).

4. Structure portante selon l'une des revendications précédentes 1 à 3, **se caractérisant par le fait qu'**elle comprend un tube central (5) formant l'appui central des supports en spirale (1) ayant un axe longitudinal identique à l'axe (O) des supports en spirale (1).

5. Structure portante selon l'une des revendications précédentes 1 à 4, **se caractérisant par le fait que** les évents (6) pour l'accès du gaz à la surface supérieure de chaque support en spirale (1) se présentent sous la forme d'orifices traversants dans la surface des éléments portants du deuxième type (3B).

6. Structure portante selon la revendication 4, **se caractérisant par le fait que** les évents (6) permettant l'accès du gaz sur la surface supérieure de chaque support en spirale (1) se présentent sous la forme d'orifices traversants dans la paroi du tube central (5), débouchant sur et/ou au-dessus de la surface supérieure du support en spirale (1).

7. Structure portante selon l'une des revendications précédentes 1 à 6, **se caractérisant par le fait qu'**elle comprend à son extrémité supérieure un anneau de support (7) pour une installation rotative dans l'enveloppe (2) et pour définir la position horizontale et/ou verticale de la structure portante par rapport à l'enveloppe (2), l'enveloppe (2) et/ou le cadre portant (9) de l'enveloppe (2) étant pourvus d'une contre-pièce (8) de l'anneau de support (7).

8. Installation pour le déplacement gravitationnel contrôlé d'un matériau chargé, **se caractérisant par le fait qu'**elle comprend
- une structure portante pour le déplacement gravitationnel contrôlé du matériau chargé selon l'une des revendications précédentes, disposée de telle sorte que l'axe (O) des supports en spirale (1) soit orienté verticalement avec une déviation maximale de 8°;
- une enveloppe (2) dans laquelle la structure portante est logée de manière pivotante;
- un dispositif technique pour faire tourner la structure portante à l'intérieur de l'enveloppe (2);
- un ventilateur à pression (10) pour faire souffler du gaz dans l'espace intérieur de l'enveloppe (2).

9. Installation selon la revendication 8, **se caractérisant en outre par le fait qu'**elle comprend au moins un convoyeur (4) de matériaux et/ou une étaleuse supérieure (13) pour transporter et/ou placer des matériaux dans la partie supérieure de la structure portante et/ou comprend au moins un convoyeur inférieur (11) de matériaux et/ou une étaleuse inférieure (16) pour le remplissage de matériaux et/ou l'enlèvement des matériaux dans la partie basse de l'installation.

10. Installation selon la revendication 8 ou 9, **se caractérisant par le fait qu'**elle comprend en outre un écran mobile de manière indépendante (17) situé entre la structure portante et l'étaleuse inférieure (16),
l'écran (17) étant pourvu d'au moins une ouverture permettant au matériau de tomber sur l'étaleuse inférieure (16).

11. Installation selon l'une des revendications 8 à 10, **se caractérisant par le fait que** l'enveloppe (2) est pourvue d'une isolation thermique (15).

12. Installation selon l'une des revendications 8 à 11, **se caractérisant par le fait que** la surface intérieure de l'enveloppe (2) est pourvue d'au moins un élément saillant vers l'intérieur (14).

13. Installation selon l'une des revendications 9 à 12, **se caractérisant par le fait que** le convoyeur (4) destiné à acheminer les matériaux dans la partie supérieure de la structure portante est au moins partiellement contenu dans le tube central (5) et adapté pour l'acheminement des matériaux à travers le tube central (5).

14. Installation selon la revendication 13, **se caractérisant par le fait que** le convoyeur (4) pour l'acheminement des matériaux dans la partie supérieure de la structure portante partiellement contenue dans le tube central (5) se présente sous la forme d'un convoyeur à vis dont l'axe longitudinal est identique à l'axe (O) des supports en spirale (1),
une base non rotative (12) dans laquelle est placée la partie inférieure du convoyeur à vis sans fin se trouvant sous le tube central (5)
et le convoyeur inférieur (11) de matériaux pour le remplissage et l'enlèvement des matériaux dans la partie inférieure de l'installation débouchant dans la base non rotative (12).

15. Installation selon l'une des revendications 8 à 12, **se caractérisant par le fait que** la sortie du ventilateur à pression (10) pour faire souffler le gaz dans l'espace intérieur de l'enveloppe (2) débouche dans le tube central (5).
